# EUROPEAN PATENT SPECIFICATION

(11) **EP 2 926 171 B1**
(45) Date of publication and mention of the grant of the patent: **20.12.2017**
(21) Application number: 13753024.2
(22) Date of filing: 13.08.2013
(51) Int. Cl.: G01V 1/30

(54) **SYSTEM AND METHOD FOR SEISMIC VELOCITY ANOMALY ANALYSIS**
SYSTEM UND VERFAHREN ZUR ANALYSE VON ANOMALIEN SEISMISCHER GESCHWINDIGKEIT
SYSTÈME ET PROCÉDÉ D'ANALYSE D'ANOMALIES DE VITESSE SISMIQUE

(30) Priority: 30.11.2012 US 201213690719
(43) Date of publication of application: 07.10.2015
(73) Proprietor: Chevron U.S.A. Inc., San Ramon, CA 94583 (US)
(72) Inventor: NEALON, Jeffrey William, San Ramon, California 94583 (US); LIEBES, Eric, San Ramon, California 94583 (US)
(74) Representative: Nash, David Allan
(86) International application number: PCT/US2013/054625
(87) International publication number: WO 2014/084929

(56) References cited:
- US-A1- 2010 074 053
- FRUEHN J ET AL: "Resolving near-seabed velocity anomalies: deep water offshore eastern india", GEOPHYSICS, SOCIETY OF EXPLORATION GEOPHYSICISTS, US, vol. 73, no. 5, sup, 1 September 2008 (2008-09-01), pages VE235-VE241, XP001516173, ISSN: 0016-8033, DOI: 10.1190/1.2957947
- FLECHA I ET AL: "Imaging low-velocity anomalies with the aid of seismic tomography", TECTONOPHYSICS, ELSEVIER, AMSTERDAM, NL, vol. 388, no. 1-4, 13 September 2004 (2004-09-13), pages 225-238, XP004579033, ISSN: 0040-1951, DOI: 10.1016/J.TECTO.2004.04.031
- YORDKAYHUN ET AL: "Shallow velocity-depth model using first arrival traveltime inversion at the CO2SINK site, Ketzin, Germany", JOURNAL OF APPLIED GEOPHYSICS, ELSEVIER, AMSTERDAM, NL, vol. 63, no. 2, 6 October 2007 (2007-10-06), pages 68-79, XP022287940, ISSN: 0926-9851, DOI: 10.1016/J.JAPPGEO.2007.05.001

## Description

### BACKGROUND

### Field

The present invention relates generally to seismic imaging and more particularly to velocity model correction.

### Background

Seismic surveying is used to characterize subsurface formations and in particular for locating and characterizing potential hydrocarbon reservoirs. One or more seismic sources at the surface generate seismic signals that propagate through the subsurface, reflect from subsurface features, and are collected by sensors. Raw data is generally in the form of travel times and amplitudes, which must be processed in order to obtain information about the structure of the subsurface.

Typically, processing includes inversion of the collected time information to produce a velocity model of the subsurface structure. Because there are usually multiple velocity solutions that satisfactorily explain any given set of time data, it is not always known whether the velocity models accurately depict the subsurface structure. In some circumstances, there may be localized regions in which the velocity is highly nonhomogeneous. The non-homogeneity may result from presence of local high or low velocity zones in the subsurface structure.

Clathrates are substances in which a lattice structure made up of first molecular components (host molecules) that trap or encage one or more other molecular components (guest molecules) in what resembles a crystal-like structure. In the field of hydrocarbon exploration and development, clathrates of interest are generally clathrates in which hydrocarbon gases are the guest molecules in a water molecule host lattice. They can be found in relatively low temperature and high pressure environments, including, for example, deepwater sediments and permafrost areas.

Reference may be made to:
a paper by Fruehn J et al: "Resolving near-seabed velocity anomalies: deep water offshore eastern india", Geophysics, Society Of Exploration Geophysicists, vol. 73, no. 5;
a paper by Flecha I et al: "Imaging low-velocity anomalies with the aid of seismic tomography", Tectonophysics, Elsevier, vol. 388, no. 1-4;
a paper by Yordkayhun et al: "Shallow velocity-depth model using first arrival traveltime inversion at the C02SINK site, Ketzin, Germany", Journal Of Applied Geophysics, Elsevier, vol. 63, no. 2; and
US 2010/074053 A1, directed to "Methods For Concurrent Generation Of Velocity Models And Depth Images From Seismic Data".

### SUMMARY

The present invention is defined by the independent claims, to which reference should now be made. Specific embodiments are defined in the dependent claims.

An aspect of an embodiment of the present invention includes a system including a processor, the processor being configured to perform the foregoing method.

Aspects of embodiments of the present invention include computer readable media encoded with computer executable instructions for performing any of the foregoing methods.

### DESCRIPTION OF THE DRAWINGS

Other features described herein will be more readily apparent to those skilled in the art when reading the following detailed description in connection with the accompanying drawings, wherein:
Figure 1 is a hybrid image combining velocity anomaly information with amplitude information;
Figure 2 is a flowchart illustrating a method of analyzing a seismic image in accordance with an embodiment of the invention;
Figure 3 is another hybrid image combining velocity anomaly information with amplitude information;
Figure 4 is a flowchart illustrating a method of analyzing a seismic image in accordance with an embodiment of the invention; and
Figure 5 is a schematic illustration of a computing system for use in analyzing a seismic image in accordance with an embodiment of the invention..

### DETAILED DESCRIPTION

Velocity models may include anomalies as a result of a variety of factors present in the subsurface under study. The inventors have developed tools for characterization of subsurface conditions and structures based on velocity anomaly data.

### CLATHRATE DEPOSIT IDENTIFICATION

In an embodiment, velocity anomaly may be used as part of a method for identifying clathrate deposits. In mud prone sediments, clathrates are often broadly distributed in low concentrations. In sand prone environments, however, it may be that higher concentrations of clathrates are more likely to form, given sufficient charge. Because these environments tend to be located in relatively shallow subsurface regions, where vertical velocity gradients tend to be high due to compaction, it may be difficult to identify velocity variations that would indicate high concentrations of clathrate. The inventors have developed a method of analysis of a velocity anomaly field to improve detection and localization of high velocity materials that may correspond to useful clathrate deposits, which themselves tend to be high velocity compared to marine sediment in which they may appear. By way of example, marine sediments at relevant depths have a velocity between about 1700-2000 m/s while clathrates may have velocities around 3000 m/s.

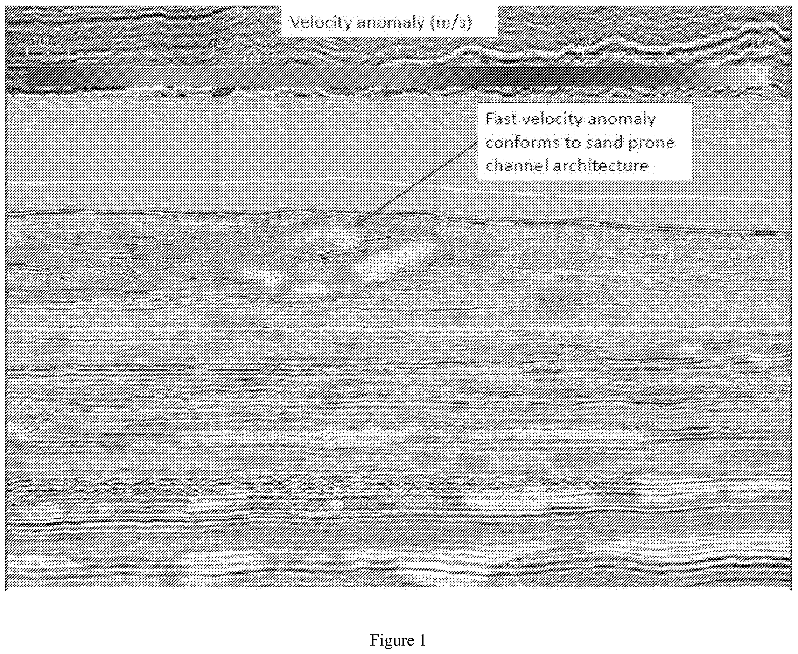

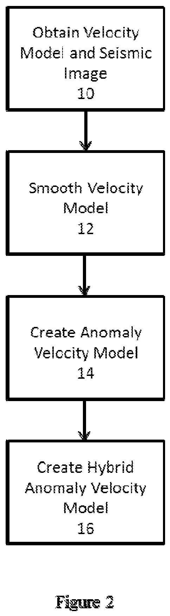

In an embodiment, an anomaly model is produced and overlain on a seismic image to produce a hybrid anomaly velocity model as illustrated in Figure 1. In a method in accordance with an embodiment, as shown in the flowchart of Figure 2, tomographic velocity analysis including, for example, traveltime tomography or tomographic velocity inversion, is used to define a velocity model for the subsurface region.

Once the velocity field is obtained 10, it is spatially smoothed 12 using long spatial wavelength smoothing. In an embodiment, during the smoothing, vertical resolution is maintained. As an example, this smoothing may be produced using a function of the average of all velocity measurements from a selected water bottom. This smoothed velocity field will be used as a background velocity field to aid in the identification of anomalous regions. Typically, software packages that are used in velocity modeling include functionality for smoothing. As an example, GOCAD, available from Paradigm Geophysical of Houston, Texas includes such functionality, though other commercially available or custom software implementations may be used.

Once the smoothed field is generated, it is subtracted from the original velocity field 14, and the resulting field may be considered to be an anomaly field or anomaly model. That is, because the velocity field contains more high frequency information, and the smoothed field represents the low frequency information, the remaining high frequency information after subtraction is more likely to represent anomalous structures (i.e., structures that are notably higher or lower velocity than the background).

Once the anomaly model has been produced, it is overlain on the seismic stack as illustrated in Figure 1, to create a hybrid anomaly velocity model. In an embodiment, the anomaly model is visualized via a color image in which color is indicative of an anomaly velocity level. The seismic stack image is a black and white image in which brightness is indicative of amplitude of a reflected signal.

The combined anomaly model and seismic stack image may then be used to identify areas in which the stack amplitudes show channel-like geometry that are also anomalous velocity areas. In particular, if the anomaly information indicates a high velocity area and the stack image indicates a channel geometry, those areas are more likely to include clathrate deposits than are areas with channel geometry that do not have high velocity anomalies.

Additional cues may be incorporated into the identifying. For example, clathrates are generally known to be present within particular depth ranges because they are stable within a specific pressure and temperature envelope. Locations meeting these criteria may be referred to as clathrate stability zones. In deepwater settings, this is usually within a shallow zone beneath the seafloor. Therefore, if high velocity anomaly and channel-like geometries are found at large depths, they may be ignored or assigned reduced likelihood of clathrate presence.

Those regions that have high anomaly, channel-like structure and lie within an appropriate depth range are then flagged for further interpretation by an expert and/or for application of a different analysis method.

In the example illustrated in Figure 1, the bright region A near the surface represents a channel-like structure (recognizable from the seismic image) that also includes a bright coloring (purple and white in the original color image), corresponding to fast velocities.

In an example, an amplitude envelope is defined, and applied to the image in order to identify likely possibilities for further review by a seismic interpretation expert.

In an example, a threshold for velocity anomaly value is set, and a pattern recognition algorithm is applied to the image, to identify contiguous regions in which the velocity anomaly threshold value is exceeded. These regions are further culled by application of depth criteria, eliminating those regions that are below a base of the clathrate stability zone. Finally, edges of the identified velocity anomalies are tested to determine whether they are coincident with high amplitude seismic signals indicating the likelihood that the high anomaly zone represents a physical subsurface structure. These computer-identified zones may then be further reviewed by the seismic image analysis expert.

In an example, decisions on exploitation of the identified clathrates may be made based on the analysis. For example, exploratory drilling decisions may be made. Likewise, management decisions including methodology for production such as use of dissociation-promoting techniques, pre-compaction of the producing region, and the like may be based on the images of the deposits.

### STRATIGRAPHIC IMAGING

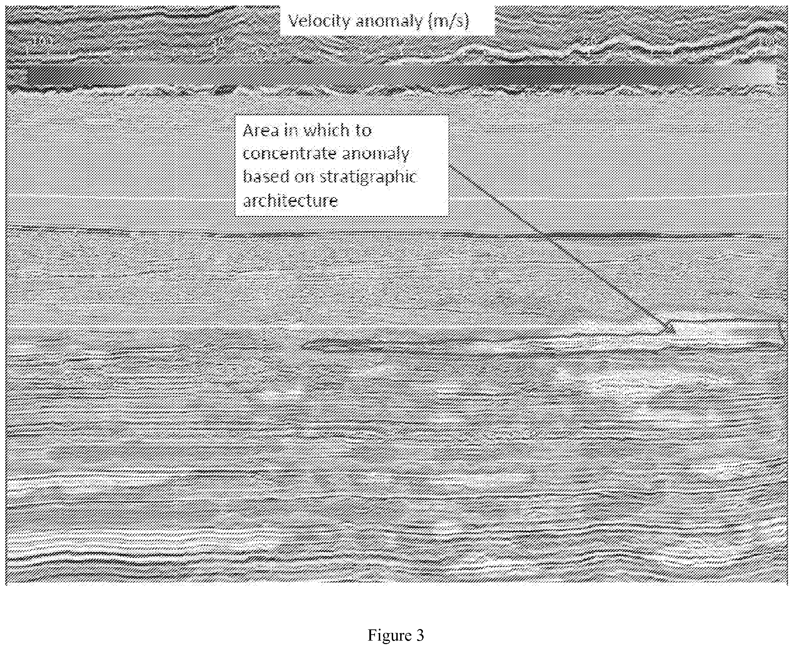

Typically, tomographic techniques are able to resolve local low or high velocity zones but may not be effective in resolving precise vertical or lateral extent of an anomaly. Therefore, in an embodiment, anomaly analysis of the velocity field as illustrated in Figure 3 may be used to assist in resolving subsurface structures within local high and/or low velocity zones, and vice versa.

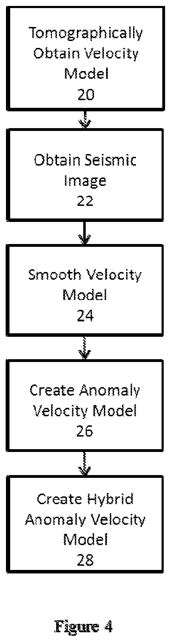

First, as shown in the flowchart of Figure 4, using a tomography technique, a velocity model is defined 20 and a seismic image is obtained 22. For example, prestack depth migration analysis may be used, though other tomographic techniques can alternately be used.

Once the velocity field is obtained, it is spatially smoothed 24 using long spatial wavelength smoothing. In an embodiment, during the smoothing, vertical resolution is maintained.

The tomographic field is subtracted from the smoothed field to create an anomaly volume or anomaly model 26. The velocity model is then overlain on a seismic stack image as in the previous application to generate a hybrid velocity amplitude model 28.

Once the hybrid velocity amplitude model is produced, stratigraphic or structural features that are coincident with anomalies are identified. As described above, this identification may be performed by an expert viewing the data on a computing device. In principle, automated pattern recognition processes may be used either to identify the features or may be used to pre-screen for features that are to be further examined by the expert.

A human interpreter defines a geobody within the image. In Figure 3, the geobody is defined by the black outline. This geobody may be defined in any appropriate manner. For example, the interpreter may use an input device such as a mouse or pad device to identify edges of the geobody. In principle, image analysis software may be used to identify geobodies based on pattern recognition algorithms. Where automated approaches are pursued, a human interpretation step may be used to refine the automatically identified geobodies.

Once the geobody is defined, it may be populated with the appropriate velocity anomaly. As will be appreciated, prior to the use of geobody definition of the anomaly, it may be poorly defined, and the measured anomaly may extend beyond (either in depth or in extent) the geologically reasonable location for the anomaly. This can be observed in Figure 3 in that the anomaly (bright portions of the anomaly model) extends beyond the edges of the defined geobody. That is, edges of measured anomalies tend to be blurred and/or mispositioned within the region. By constraining the location of the anomaly to the location of an interpreted geobody, the velocity model may be refined to better reflect the likely subsurface structure. With respect to the model of Figure 3, that portion of the anomaly extending beyond the top of the geobody would be reduced or eliminated while portions of low anomaly that are within the geobody may be increased to equal the high anomaly present throughout the remainder of the geobody.

The anomaly model, once constrained by location of identified geobodies, is then added back to the background (smoothed) velocity model to produce a modified velocity model. This new product may then be used to remigrate the seismic data to produce a new seismic image. Optionally, once the new seismic image is produced, the process may be iterated or the model otherwise refined via additional rounds of tomography.

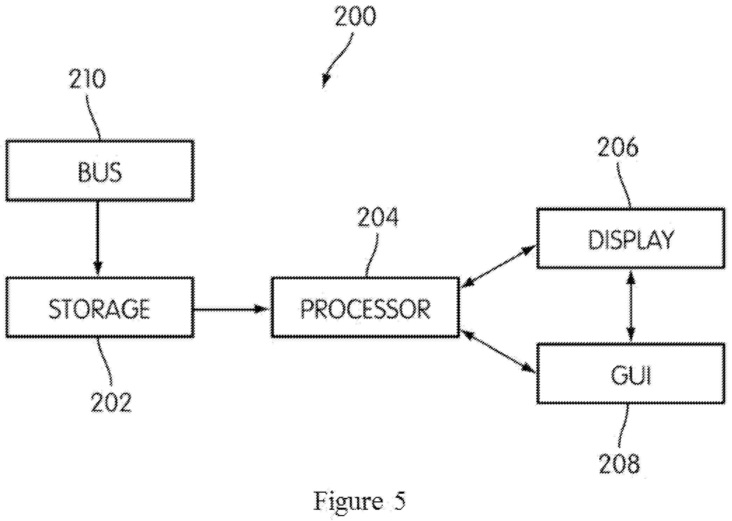

A system for performing the method is schematically illustrated in Figure 5. A system includes a data storage device or memory 202. The stored data may be made available to a processor 204, such as a programmable general purpose computer. The processor 204 may include interface components such as a display 206 and a graphical user interface 208. The graphical user interface may be used both to display data and processed data products and to allow the user to select among options for implementing aspects of the method. Data may be transferred to the system 200 via a bus 210 either directly from a data acquisition device, or from an intermediate storage or processing facility (not shown).

While the method is described and illustrated in the context of two dimensional images, the principles of the method are applicable to three dimensional analysis as well.

As will be appreciated, the methods as described herein may be performed using a computing system having machine executable instructions stored on a tangible, non-transitory medium. The instructions are executable to perform each portion of the method, either autonomously, or with the assistance of input from an operator. In an embodiment, the system includes structures for allowing input and output of data, and a display that is configured and arranged to display the intermediate and/or final products of the process steps. A method in accordance with an embodiment may include an automated selection of a location for exploitation and/or exploratory drilling for hydrocarbon resources. Where the term processor is used, it should be understood to be applicable to multi-processor systems and/or distributed computing systems.

Those skilled in the art will appreciate that the disclosed embodiments described herein are by way of example only, and that numerous variations will exist. The invention is limited only by the claims, which encompass the embodiments described herein. In addition, it should be appreciated that structural features or method steps shown or described in any one embodiment herein can be used in other embodiments as well.

## Claims

1. A method of analyzing a seismic image of a subsurface region, comprising:
obtaining (10; 20) a velocity model for the subsurface region using a tomographic technique; and
obtaining a seismic image for the subsurface region (10; 22),
**characterized by**:
smoothing (12; 24) the velocity model to produce a smoothed velocity model using a computing system;
subtracting the velocity model from the smoothed velocity model to create an anomaly velocity model (14; 26) using the computing system; and
creating (16; 28) a hybrid anomaly velocity model based on the anomaly velocity model and the seismic image using the computing system.

2. A method as in claim 1, further comprising defining a geobody based on the hybrid anomaly velocity model.

3. A method as in claim 2, further comprising, identifying areas where a selected geometry is coincident with a velocity anomaly.

4. A method as in claim 2, further comprising after the defining the geobody, constraining a portion of the anomaly model based on the defined geobody.

5. A method as in claim 4, wherein the constraining comprises removing a portion of an anomaly extending outside an edge of the defined geobody.

6. A method as in claim 4, wherein the constraining comprises introducing anomalous velocity within the defined geobody.

7. A method as in claim 4, further comprising:
using the constrained portion of the anomaly model to modify the anomaly field; and
adding the modified anomaly field to the smoothed velocity model to produce a modified velocity model.

8. A method as in claim 7, further comprising performing a migration based on the modified velocity model.

9. A system (200) configured to analyze a seismic image of a subsurface region, the system comprising:
one or more processors (204) configured to execute computer program modules, the computer program modules being configured to carry out the method of any of claims 1 to 8.

10. Machine executable instructions configured for performing, on a computing system, the method of analyzing a seismic image of a subsurface region of any of claims 1 to 8.

11. A non-transitory machine readable medium comprising the machine executable instructions of claim 10.

## Patentansprüche

1. Verfahren zum Analysieren eines seismischen Bildes eines Untergrundbereichs, umfassend
Erhalten (10; 20) eines Geschwindigkeitsmodells für den Untergrundbereich mit Hilfe einer tomografischen Technik; und
Erhalten eines seismischen Bildes für den Untergrundbereich (10; 22), **gekennzeichnet durch**
Glätten (12; 24) des Geschwindigkeitsmodells zum Herstellen eines geglätteten Geschwindigkeitsmodells mit Hilfe eines Rechensystems;
Abziehen des Geschwindigkeitsmodells vom geglätteten Geschwindigkeitsmodell zum Erschaffen eines Geschwindigkeitsanomaliemodells (14; 26) mit Hilfe des Rechensystems; und
Erschaffen (16; 28) eines hybriden Geschwindigkeitsanomaliemodells auf der Grundlage des Geschwindigkeitsanomaliemodells und des seismischen Bildes mit Hilfe des Rechensystems.

2. Verfahren gemäß Anspruch 1, zudem umfassend Definieren eines Geokörpers auf der Grundlage des Geschwindigkeitsanomaliemodells.

3. Verfahren gemäß Anspruch 2, zudem umfassend Identifizieren von Bereichen, in denen eine ausgewählte Geometrie zusammen mit der Geschwindigkeitsanomalie vorkommt.

4. Verfahren gemäß Anspruch 2, zudem umfassend, nach dem Definieren des Geokörpers, Beschränken eines Abschnitts des Anomaliemodells auf der Grundlage des definierten Geokörpers.

5. Verfahren gemäß Anspruch 4, wobei das Beschränken umfasst Entfernen eines Abschnitts einer Anomalie, der sich außerhalb eines Rands des definierten Geokörpers erstreckt.

6. Verfahren gemäß Anspruch 4, wobei das Beschränken umfasst Einführen von anomaler Geschwindigkeit innerhalb des definierten Geokörpers.

7. Verfahren gemäß Anspruch 4, zudem umfassend
Verwenden des beschränkten Abschnitts des Anomaliemodells zum Modifizieren des Anomaliefeldes; und
Zusetzen des modifizierten Anomaliefeldes zum geglätteten Geschwindigkeitsmodell zum Herstellen eines modifizierten Geschwindigkeitsmodells.

8. Verfahren gemäß Anspruch 7, zudem umfassend Ausführen einer Migration auf der Grundlage des modifizierten Geschwindigkeitsmodells.

9. System (200), ausgelegt zum Analysieren eines seismischen Bildes eines Untergrundbereichs, das System umfassend
einen oder mehrere Prozessoren (204), ausgelegt zum Ausführen von Rechnerprogrammmodulen, wobei die Rechnerprogrammmodule ausgelegt sind zum Ausführen des Verfahrens aus irgendeinem der Ansprüche 1 bis 8.

10. Maschinenausführbare Instruktionen, ausgelegt zum Durchführen, auf einem Rechnersystem, des Verfahrens zum Analysieren eines seismischen Bildes eines Untergrundbereichs aus irgendeinem der Ansprüche 1 bis 8.

11. Nicht vergängliches maschinenlesbares Medium, umfassend die maschinenausführbaren Instruktionen aus Anspruch 10.

## Revendications

1. Procédé pour analyser une image sismique d'une région souterraine, comprenant :
obtenir (10 ; 20) un modèle de vélocité pour la région souterraine en utilisant une technique tomographique ; et
obtenir une image sismique pour la région souterraine (10 ; 22),
**caractérisé par** :
lisser (12 ; 24) le modèle de vélocité pour produire un modèle de vélocité lissé en utilisant un système calculateur ;
soustraire le modèle de vélocité du modèle de vélocité lissé pour créer un modèle d'anomalie de vélocité (14 ; 26) en utilisant le système calculateur ; et
créer (16 ; 28) un modèle d'anomalie de vélocité hybride sur la base du modèle d'anomalie de vélocité et de l'image sismique en utilisant le système calculateur.

2. Procédé selon la revendication 1, comprenant en plus définir un géocorps sur la base du modèle d'anomalie de vélocité hybride.

3. Procédé selon la revendication 2, comprenant en plus identifier des zones dans lesquelles une géométrie sélectionnée coïncide avec une anomalie de vélocité.

4. Procédé selon la revendication 2, comprenant en plus, après la définition du géocorps, contraindre une partie du modèle d'anomalie sur la base du géocorps défini.

5. Procédé selon la revendication 4, dans lequel contraindre comprend enlever une partie d'une anomalie qui s'étend à l'extérieur d'un bord du géocorps défini.

6. Procédé selon la revendication 4, dans lequel contraindre comprend l'introduction d'une vélocité anomale à l'intérieur du géocorps défini.

7. Procédé selon la revendication 4, comprenant en plus :
utiliser la partie contrainte du modèle d'anomalie pour modifier le champ d'anomalie ; et
ajouter le champ d'anomalie modifié au modèle de vélocité lissé pour produire un modèle de vélocité modifié.

8. Procédé selon la revendication 7, comprenant en plus exécuter une migration sur la base du modèle de vélocité modifié.

9. Système (200) configuré pour analyser une image sismique d'une région souterraine, le système comprenant :
un ou plusieurs processeurs (204) configurés pour exécuter des modules de logiciels d'ordinateur, les modules de logiciels d'ordinateur étant configurés pour exécuter le procédé d'une quelconque des revendications 1 à 8.

10. Instructions pouvant être exécutées par une machine, configurées pour exécuter, sur un système calculateur, le procédé pour analyser une image sismique d'une région souterraine d'une quelconque des revendications 1 à 8.

11. Médium non-transitoire pouvant être lu par une machine comprenant les instructions pouvant être exécutées par une machine de la revendication 10.
